# EUROPEAN PATENT APPLICATION

(11) **EP 1 355 239 A1**
(43) Date of publication of application: **22.10.2003**
(21) Application number: 02008813.4
(22) Date of filing: 19.04.2002
(51) Int. Cl.: G06F 17/30

(54) **Method and system for providing a delta information output-stream**

(71) Applicant: SAP Aktiengesellschaft, 69190 Walldorf (DE)
(72) Inventor: Goerke, Björn, 69242 Mühlhausen (DE); McKellar, Brian, 69126 Heidelberh (DE)

(57) **Abstract**

Methods and systems to provide and use a data-structure (921-OS) that is created as an output-stream on a server to enable delta-handling in server-pages. The server stores a page-document that includes a plurality of page-components and further stores a browser-document that comprises a plurality of browser-components (150-0, 150-2, 150-3). Each browser-component (150-0, 150-2, 150-3) corresponds to a page-component. The data-structure (921-OS) includes a page-buffer (921-P). The page-buffer (921-P) is the root-node of a document structure (160); The data-structure (921-OS) further includes the plurality of browser-components (150-0, 150-2, 150-3), wherein the page-buffer (921-P) and the browser-components (150-0, 150-2, 150-3) have relationships that reflect the structure of the browser-document (150).

## Description

### Field of the Invention

The present invention generally relates to electronic data processing, and more particularly, relates to method, computer program product and system for client-server communication.

### Background of the Invention

Server-pages (referred to as pages hereinafter), such as JAVA Server-pages (JSP), that include relevant information for a graphical user interface (GUI) are typically generated on a server. The result is a browser-document that the server transmits to a client, At the client, the browser-document is visualized for a user via a conventional browser, such as the Microsoft Internet Explorer. When the user interacts with the client via the GUI to refresh the page, the whole process is repeated, although in some cases only a minor portion of the page is modified. This requires a high bandwidth of the computer network that connects the client to the server because the whole page (layout information and data) is re-generated on the server and the resulting browser-document is re-transmitted from the server to the client via the network. Further, the user is confronted with undesired effects, such as waiting time and screen flicker, until the refreshed page is finally presented on the client.

Some conventional browsers, such as the Microsoft Internet Explorer IE 6.0, include a feature for flicker-free rendering. When the client receives a modified page, the browser identifies modified components of the page and only replaces these components instead of the whole page (for example, by dynamic HTML injection into the page's document object model DOM). This leads to a reduction of screen-flicker for the user but still requires bandwidth for transmission of the whole page from the server to the client.

There is an ongoing need to reduce bandwidth requirements in client-server communication and reduce undesired effects for the user at the same time.

### Summary of the Invention

Therefore, it is an objective of the present invention to provide methods, computer program products and computer systems to provide a data structure that enables a computer system to reduce bandwidth requirements in client-server communication when refreshing pages.

To meet this objective, preferred embodiments of the present invention provide the following features.

In a server-side embodiment of the present invention, a server stores a page-document that comprises a plurality of page-components. The server generates a browser-component for each page-component and builds a document-structure of a browser-document, wherein the browser-document corresponds to the page-document. As used hereinafter, the term browser-component refers to components of the browser-document that are relevant to delta-handling. The document-structure includes a page-buffer and each browser-component. The browser-components have relationships that reflect the structure of the browser-document.

Optionally, the server sends the document-structure to the data structure. The data structure is also referred to as output-stream, hereinafter.

Optionally, the server identifies at least one browser-delta in the document-structure and sends the at least one browser-delta to the output-stream.

In a client-side embodiment of the present invention, a client receives an output-stream from a server. The output-stream includes a document-structure of a browser-document. The browser-document corresponds to a page-document on the server. The document-structure includes a page-buffer and a plurality of browser-components. The page-buffer and the browser-components have relationships that reflect the structure of the browser-document. From the output-stream the client builds a document object model of the browser-document.

It is an effect of the present invention that the required bandwidth for network communication between server and client is lower when compared to prior art systems where the whole browser-document is exchanged between the server and client instead of a browser-delta. According to an embodiment of the present invention, the output-stream data structure allows to achieve any degree of granularity for the browser-delta. Often only a minor portion of the browser-document is modified. In this case the browser-delta transmission requires significant less bandwidth than the whole browser-document transmission.

It is a further effect of the present invention that the browser-delta is determined by a comparison of two versions of the browser-document. The differences between the two versions are detected at the level of browser-components. In other words, the granularity of the browser-delta is defined by the granularity of the corresponding browser-component in the output-stream.

It is a further effect of the present invention that a user, who interacts with the client, experiences an eye pleasing effect because the update of the browser-document with the browser-delta results in a flicker-free change of the graphical user interface. In one embodiment of the present invention this is achieved by building the document object model of the browser-document by using an initial output-stream and injecting browser-deltas that are received by the client via further output-streams into the document object model.

The aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: illustrates a simplified block diagram of a computer network system that can be used with one embodiment of the present invention;
- FIG. 2: illustrates an implementation of a graphical user interface according to one embodiment of present invention at three consecutive time points;
- FIG. 3: illustrates interaction of a server and a client that are operated according to one embodiment of the present invention;
- FIGS. 4A-4D: illustrate details of generating an output-stream on the server;
- FIG. 5A, 5B: illustrate the client when processing the output-stream;
- FIG. 6: illustrates a further effect of an embodiment of the invention where the client receives a new browser-document instead of a browser-delta;
- FIGS. 7A-7B: illustrate simplified flow charts of methods for delta-handling; and
- FIGS. 8A-7B: illustrate simplified flow charts of methods for enabling delta-handling.

### Detailed Description of the Invention

Wherever possible, the same reference numbers will be used throughout the drawings to refer to the same or like parts. For convenience of explanation a list of references is provided prior to the claims.

Definitions of terms, as used hereinafter:
client:
   client computer in a computer system.
server:
   server computer in the computer system.
application data:
   data relating to an application (e.g. customer number, address, phone number, etc.).
layout data:
   data being used for configuration of a graphical user interface (GUI).
page-document:
   a document including data, such as application data or layout data. For example, a page document can be a Java Server-page (JSP) or a Business Server-page (BSP). A page-document can include a plurality of page-components.
browser-document:
   a document that can be processed and visualized by a conventional browser. A browser-document can include a plurality of browser-components, wherein, typically a browser-component corresponds to a page-component.
browser-delta:
   a data structure that includes the difference (delta) of two different states of a browser-document (e.g. before and after a user interaction).
tag:
   representation of a page-component in a page. For example, in Java server-pages (JSP) tags use XML notation and represent a Java class.
output-stream:
   data structure to collect the output of page-components.
document object model:
   according to the corresponding W3C definition, the Document Object Model (DOM) provides a mechanism to access and manipulate parsed HTML and XML content.
buffer:
   memory area.

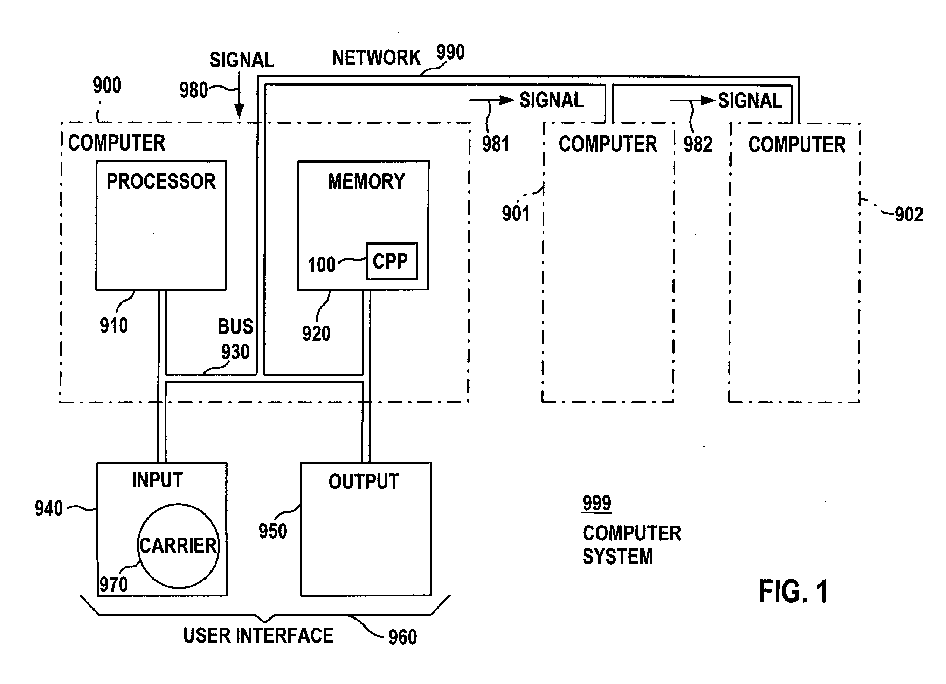

FIG. 1 illustrates a simplified block diagram of an exemplary computer system, that implements embodiments of the present invention. Computer system 999 includes computer 900 and has a plurality of further computers 901, 902 (or 90q, with q=0...Q-1, Q any number).

Computer 900 can be connected to further computers 901, 902 via computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, such as a hard disk, a floppy disk, or other magnetic disk, a tape, a cassette tape; (b) optical media, such as optical disk (CD-ROM, digital versatile disk - DVD); (c) semiconductor media, such as DRAM, SRAM, EPROM, EEPROM, memory stick, or by any other media, such as paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, such as Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

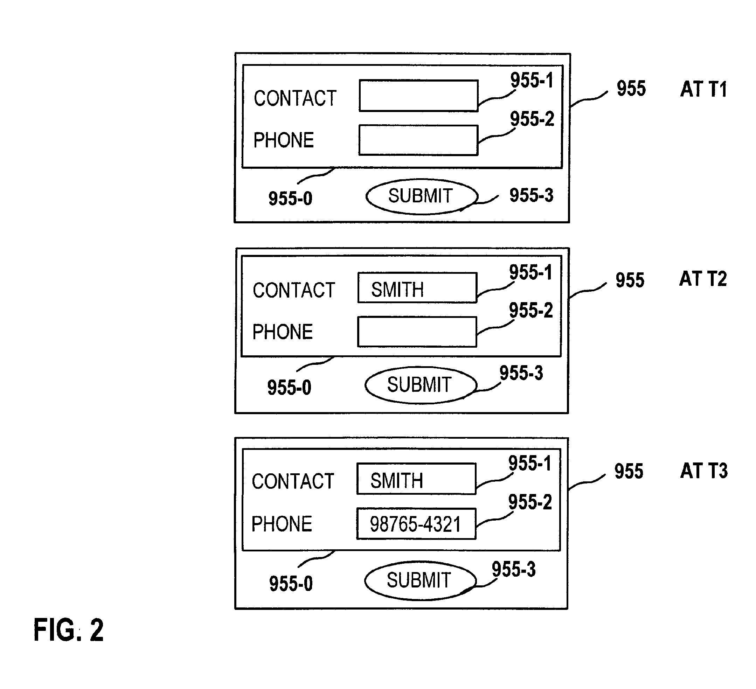

FIG. 2 illustrates an implementation of a graphical user interface 955 according to the present invention at three consecutive time points T1, T2 and T3.

For convenience of explanation, the following example of a user's interaction with graphical user interface 955 is used throughout the description to further explain the present invention. However, any graphical user interface can be implemented according to the present invention. Preferably, GUI 955 is presented to the user on output device 950 (cf. FIG. 1) and the user interacts with GUI 955 via input device 940.

GUI 955 is a graphical user interface (form) that allows the user to retrieve a phone number 955-2 for a contact person 955-1 from a corresponding application database (not shown). The user is prompted with form-components 955-0, 955-1, 955-2, 955-3. Contact component 955-1 is an input field where the user can enter the name of the contact person. Submit component 955-3 can be implemented as a button that is pressed by the user to send a request for the contact person's phone number to the corresponding application. Phone component 955-2 is an output field where the search result (phone number of the contact person) is presented to the user. Frame-component 955-0 includes contact component 955-1 and phone-component 955-2 to visualize a contextual relationship between them.

At T1, the user gets prompted with form 955, wherein contact component 955-1 and phone component 955-2 are empty.

The user then enters the name (e.g. SMITH) of the contact person into contact component 955-1 and, at T2, uses submit component 955-3 (e.g. submit-button) to send a request for the contact person's phone number to the corresponding application.

At T3, the application has identified the contact person's phone number (e.g. 98765-4321) and the result is visualized for the user in phone component 955-2.

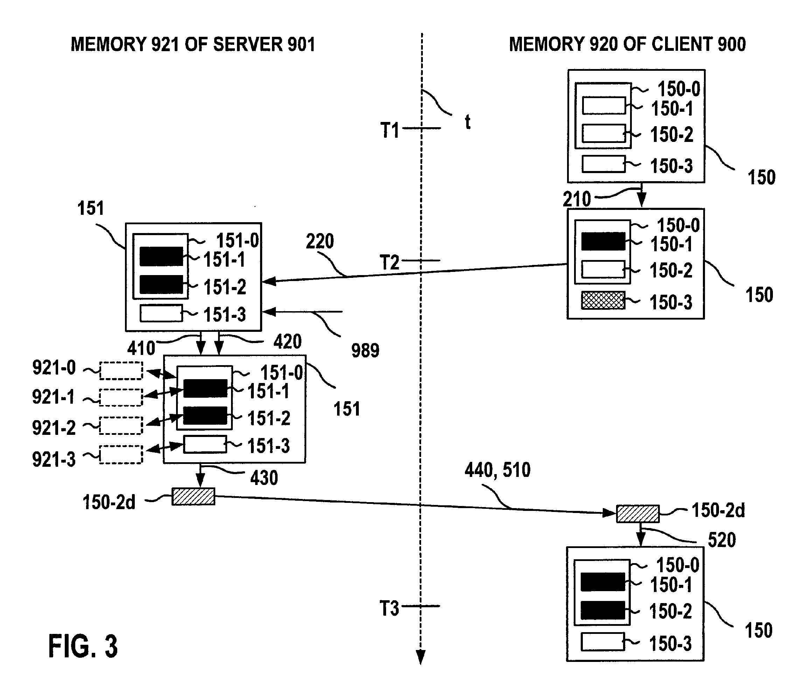

FIG. 3 illustrates interaction of computer 900 and complementary computer 901 when operated according to an embodiment of the present invention.

Time scale t (dashed arrow) is used to indicate the chronological order of events. However, time scale t does not increase linearly and, therefore, does not indicate the length of specific time intervals (e.g. (T1,T2)). Time points T1, T2, T3 (cf. FIG. 2) are shown as reference time points in the flow of events.

The left side of time scale t shows objects that are stored in memory 921 of computer 901. In the example, computer 901 is a server computer that accesses application data, such as contact person or phone number.

The right side of time scale t shows objects that are stored in memory 920 of computer 900. In the example, computer 900 is a client computer that presents application data to the user via GUI 955 (cf. FIG. 2).

Memory 921 stores page-document 151. Page-document 151 includes information to generate form 955 (cf. FIG. 2). For example, page-document 151 is a page, such as a Java Server-page (JSP), a Business Server-page (BSP) or an Active Server-page (ASP). Page-document 151 includes page-components 151-0, 151-1, 151-2, 151-3 that correspond to form-components 955-0, 955-1, 955-2, 955-3 in the example of FIG. 2, respectively.

Initially (not shown), server 901 translates page-document 151 into browser-document 150. For example, browser-document 150 is a markup language document, such as an HTML, XML, XHTML or WML document, which can be processed and visualized by a conventional browser. Browser-document 150 includes browser-components 150-0, 150-1, 150-2, 150-3 that correspond to page-components 151-0, 151-1, 151-2, 151-3, respectively.

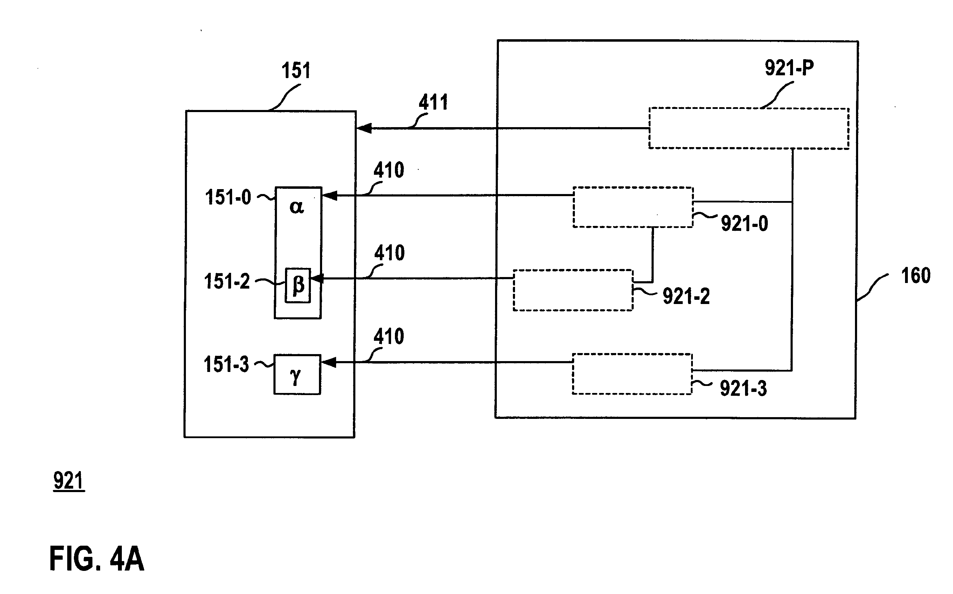

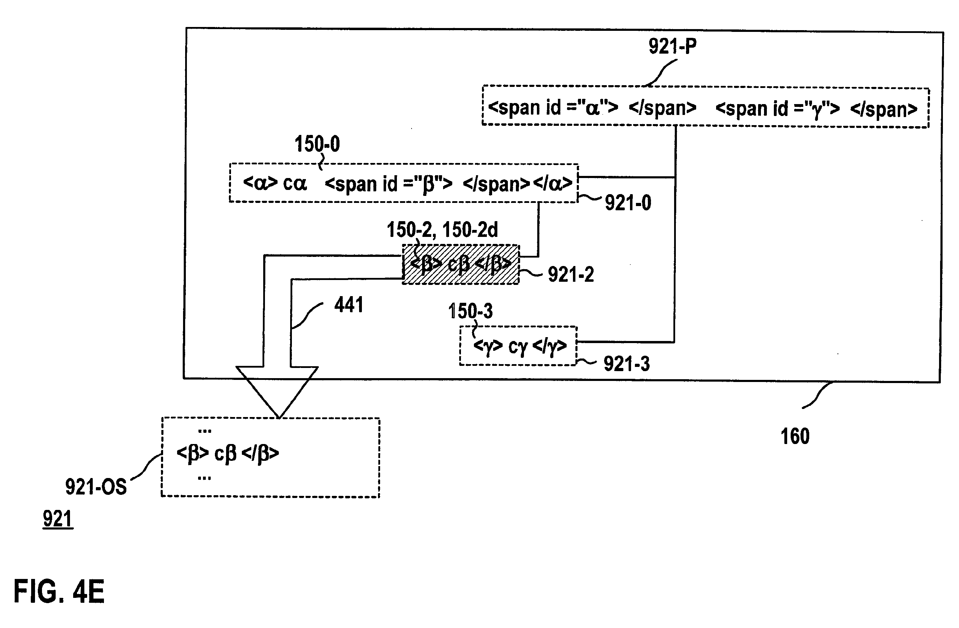

Server 901 then sends browser-document 150 to client 900 where it is stored in memory 920 and visualized 220 at T1 as form 955 via output device 950. Preferably, browser-document 150 includes dynamic data and static data. As used hereinafter, dynamic data, such as for example input/output fields, status indicators, user defined layout elements, etc., can be changed through user interaction. As used hereinafter, static data, such as for example application defined layout elements, headers, background colours/patterns, etc., are defined in an application and, in general, are not changed through user interaction. FIGS. 4A to 4C give an example of an embodiment of the present invention that explains in detail the usage of dynamic data and static data.

As described under FIG. 2, the user enters the name (e.g. SMITH) of the contact person into contact component 955-1. Client 900 fills 210 the corresponding browser-component 150-1 with the contact person name, accordingly (illustrated by dark fill colour). At T2, client 900 submits 220 request 989 for the contact person's phone number to server 901. For example, the user presses submit-component 955-3 and client 900 sets a corresponding status (illustrated by a diagonal grid pattern) for the browser-component 150-3. Alternatively, request 989 can also be submitted automatically by an application or a computer in computer system 999 (cf. FIG. 1).

Server 901 receives request 989. For example, server 901 accesses an application (e.g. an address database), retrieves the requested phone number from the application and updates corresponding page-component 151-2 in page-document 151 accordingly (illustrated by dark fill colour). In the example, the phone number "98765-4321" corresponds to an application-delta. Further application-deltas for other page-components can be generated substantially simultaneously. It is assumed that request 989 received by server 901 results in page-document 151 still to be used for further processing. Only the content of page-document 151 changes.

Then, server 901 allocates 410 component-buffers 921-0, 921-1, 921-2, 921-3 (illustrated by dashed frames) to page-components 151-0 151-1, 151-2, 151-3, respectively and writes 420 a corresponding browser-component 150-0, 150-1, 150-2, 150-3 into each component-buffer 921-0, 921-1, 921-2, 921-3. The allocation of component-buffers to page-components and the writing of browser-components into component buffers is illustrated by double arrows between a component-buffer and the corresponding page-component.

In the example, server 901 identifies 430 component-buffer 921-2 as a component-buffer that stores a browser-delta 150-2d. Other component-buffers can store further browser-deltas dependent on data changes that occurred due to request 989. For convenience of explanation it is assumed in the following description that only component-buffer 921-2 includes a browser-delta. The allocating 410, writing 420 and identifying 430 steps are explained in detail in FIGS. 4A-4B.

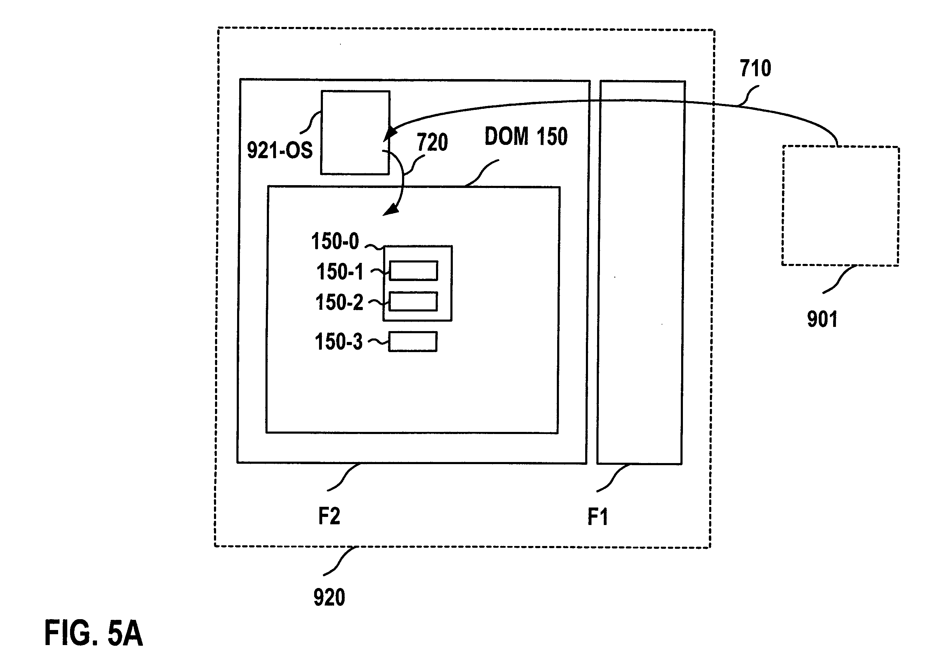

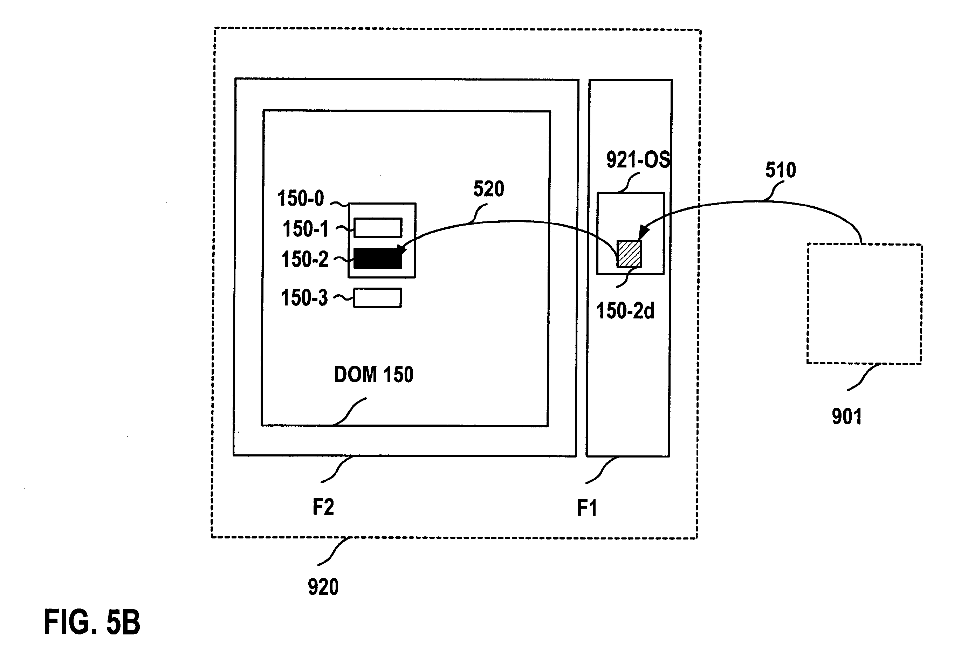

Then, server 901 sends 440 browser-delta 150-2d to client 900. Browser-delta 150-2d is stored in memory 920 after being received 510 by client 900. Client 900 uses browser-delta 151-2d to update 520 corresponding browser-component 150-2 (illustrated by dark fill colour) in browser-document 150. An implementation example for updating 520 browser-document 150 is explained in detail under FIG. 5.

At T3, the contact person's phone number (e.g. 98765-4321) is visualized for the user in phone component 955-2 that corresponds to updated browser-component 150-2.

FIGS. 4A-4F illustrate details of generating output-stream 921-OS in memory 921 of server 901.

In FIG. 4A, memory 921 stores page-document 151 including page-components 151-0, 151-2, 151-3. For convenience of explanation, page-component 151-1 is not shown. Page-components 151-0, 151-2, 151-3 have identifiers (ID) α,β,γ, respectively. Each identifier is a representation of the corresponding page-component.

In one embodiment of the present invention, when server 901 processes page-document 151, component-buffers 921-0, 921-1, 921-2 are allocated 410 to corresponding page-components 151-0, 151-2, 151-3, respectively. A component-buffer is a memory-portion of memory 921. For example, if page-document 151 is a page, such as a Java Server-page or a Business Server-page, a component-buffer can be a JSP-writer or a BSP-writer, respectively. In a preferred implementation of the present invention, component-buffers are organized in a memory stack. Advantageously, page-buffer 921-P is allocated 411 to page-document 151. Server 901 builds 620 document-structure 160, wherein the component-buffers are illustrated as child-nodes in document-structure 160 and wherein page-buffer 921-P is the root-node. Document-structure 160 implies that component-buffer 921-3 is processed after both, component-buffer 921-0 and its child-node component-buffer 921-2, have been processed. In the example, document-structure 160 is described as a component-hierarchy. However, any format of document-structure 160 that describes the relationships between various page-components of page-document 151, can be used instead( for example, a list structure, where pointers are used to define the corresponding relationships between page-components).

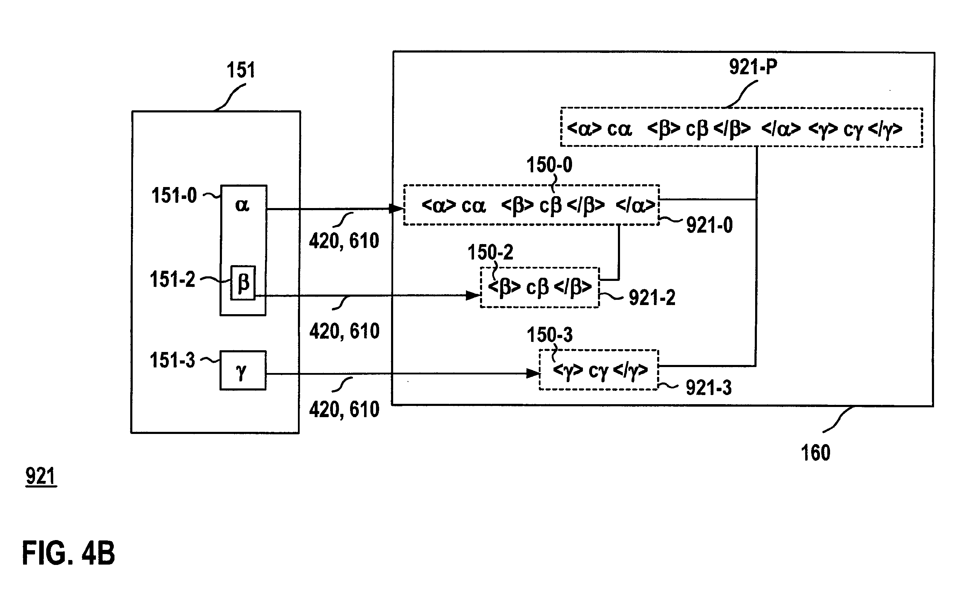

As shown in FIG. 4B, server 901 generates 610 a browser-component for each page-component. For example, server 901 writes 420 browser-components 150-0, 150-2, 150-3 into corresponding component-buffers 921-0, 921-2, 921-3. A browser-component is generated 610 from the corresponding page-component. Alternatively, browser-components can be directly written to output-stream 921-OS. Those skilled in the art can process the browser-components in the output-stream 921-OS or in any other buffer area to achieve the same results as set forth in the following description by using component-buffers. For example, in a page, page-components are represented by tags, such as XML-tags (e.g. <tagα> </tagα>). Server 901 translates the content of these tags into browser-compliant syntax (content-portion) cα, cβ, cγ (e.g. Java Script language or/and a markup language, such as HTML). The result of the translation is referred to as browser-component. In a preferred embodiment of the invention, a component-buffer copies its content, that is, the browser-component that is stored in the component-buffer, to its parent-node in document-structure 160. For example, when browser-component 150-0 is generated in component-buffer 921-0 it starts with its start-tag <α> and content-portion cα. However, before closing browser-component 150-0 with end-tag </α> child-node component-buffer 921-2 is processed. Browser-component 150-2 (<β> cβ </β>) is generated 610 into component-buffer 921-2 and then copied to the corresponding location in browser-component 150-0 in parent-node component-buffer 921-0. Then, the generation of browser-component 150-0 in component-buffer 921-0 is finalized with end-tag </α>. Preferably, component-buffer 921-0 copies its content (browser-component 150-0) to its parent-node page-buffer 921-P before the next browser-component (e.g. browser-component 150-3 (<γ> cγ </γ>) in component-buffer 921-3) is generated accordingly. Page-buffer 921-P and browser-components 150-0, 150-2, 150-3 reflect document-structure 160 representing the structure of browser-document 150.

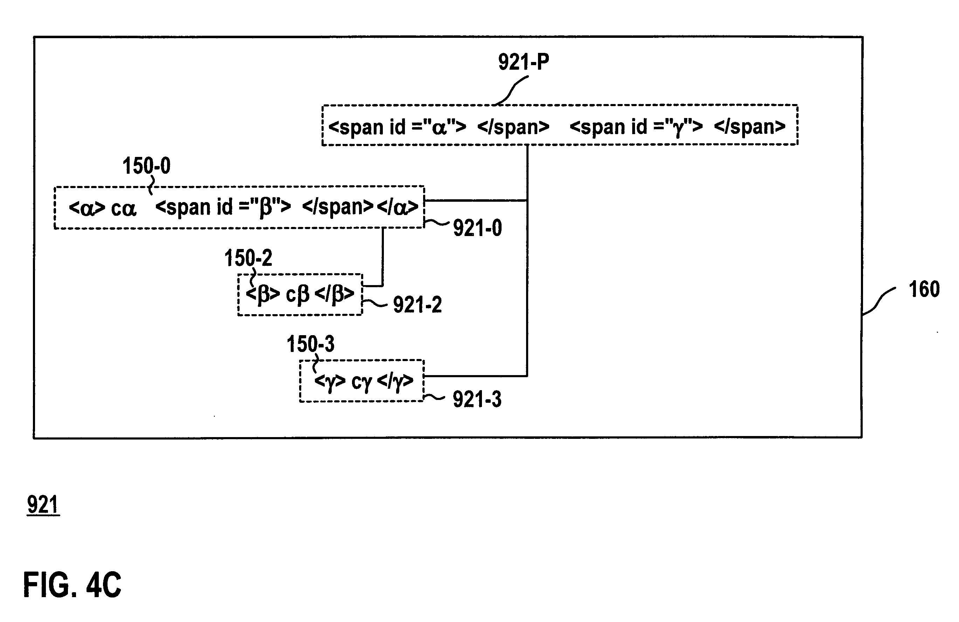

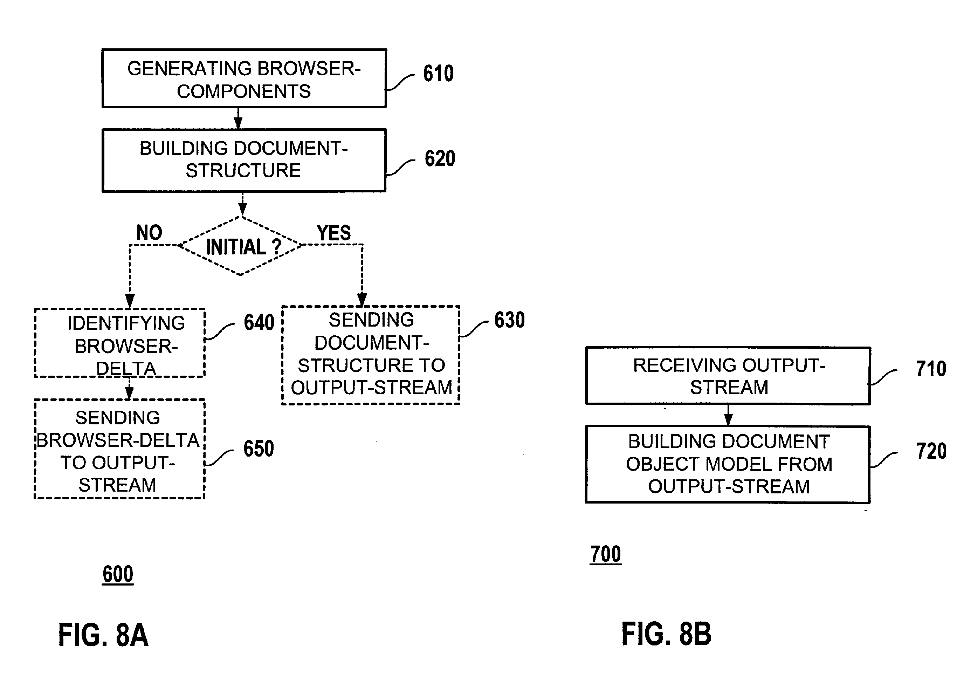

In FIG. 4C, for convenience of explanation, only browser-components 150-0, 150-2, 150-3 (in component-buffers 921-0, 921-2, 921-3) and page-buffer 921-P are shown. In a preferred embodiment, in case a browser-component of a child-node is included in the child-nodes parent-node, server 901 replaces (cf. FIG. 8) the browser-component in the parent-node with a corresponding browser-component representation (referred to as representation hereinafter). For example, browser-component 150-0 (<α> cα <β> cβ </β> </α>) is replaced in page-buffer 921-P with representation <span id="α"> </span>. The <span ...> </span> syntax is an HTML-example of a representation. The id="..."-parameter in general refers to the identifiers α,β,γ of the corresponding page-components 151-0, 151-2, 151-3, respectively. Other representations of the browser-components referring to the corresponding page-component's identification can be used by those skilled in the art. In the example, browser-component 150-3 (<γ> cγ </γ>) is replaced in page-buffer 921-P with representation <span id="γ"> </span>. At the next lower level of document-structure 160, browser-component 150-2 (<β> cβ </β>) is replaced in component-buffer 921-0 with representation <span id="β"> </span>.

It is an effect of the present invention that in many cases memory space requested by a representation is much smaller than memory space requested by the content-portion of the corresponding browser-component. It is a further effect, that after replacing browser-components with representations as described above, page-buffer 921-P and component-buffers 921-0, 921-2, 921-3 still include all information about the structure and content of browser-document 150 (cf. FIG. 3). Redundant information is eliminated.

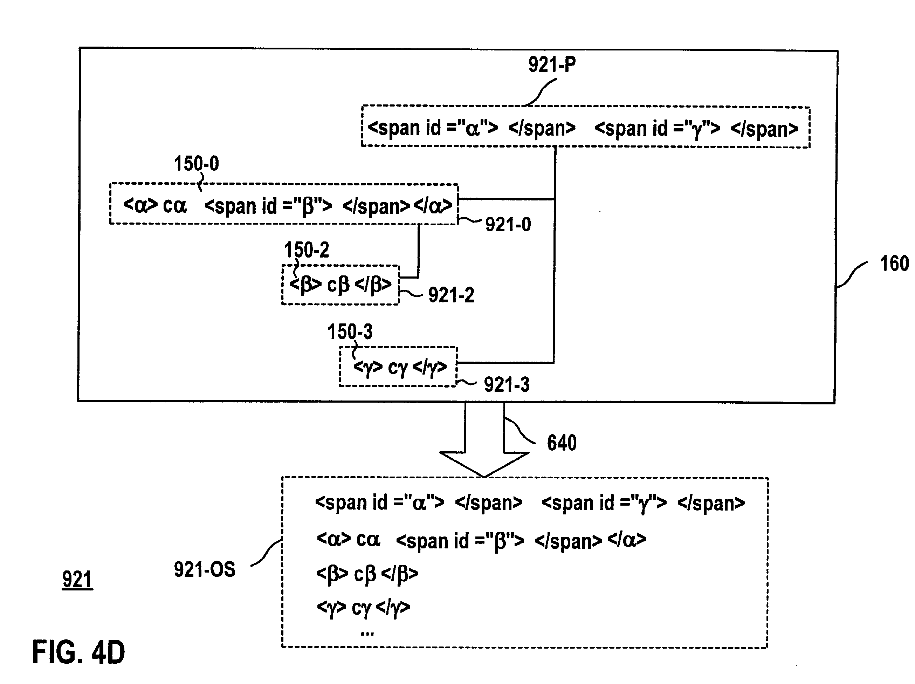

FIG. 4D illustrates generating output-stream 921-OS on server 901.

Preferably, when server 901 initially generates (not shown) browser-document 150 (cf. FIG. 3) , server 901 stores an initial version of browser-document 150 (referred to as initial version in the following description) in memory 921. Server 901 then sends the initial version to client 900 where it is visualized to the user at T1 (cf. FIG. 3). Advantageously, when sending the initial version in the example, server 901 sends 630 page-buffer 921-P and the content of each component-buffer in the document-structure 160, that is, each browser-component, to output-stream 921-OS. Output-stream 921-OS is a data structure that can be sent to client 900. In one implementation, output-stream 921-OS includes HTML code and/or JavaScript. In another implementation, output-stream 921-OS includes any other code or scripting language that can be used by a conventional browser on client 900. When client 900 initially receives the content of output-stream 921-OS, the full browser-document 150 (structure and content) is included. Preferably, server 901 clears output-stream 921-OS afterwards.

When server 901 generates a further version of browser-document 150 (referred to as further version hereinafter) upon having received request 989 as described in FIG. 4C, server 901 compares the further version with the initial version to identify deltas between the two versions. Referring back to the example of FIG. 2, the differences between the initial and the further version are the contact name "SMITH" and the phone number value "98765-4321". For convenience of explanation, only the phone number value is considered in the following description of FIG. 4F. The comparison of the initial version with the further version identifies 430 browser-delta 150-2d in identified component-buffer 921-2. Server 901 writes browser-delta 150-2d to output-stream 921-OS and sends 440 it to client 900. Preferably, server 901 replaces the initial version with the further version. In this case the method described in FIGS. 3 to 4C and 4F can be repeated. Because the structure and static content-portions of browser-document 150 are known on client 900 from the initial version, client 900 can update browser-document 150 by using browser-delta 150-2d.

Referring back now to FIG. 2, the following coding sections give specific simplified examples of data structures used by a preferred embodiment of the present invention according to the scenario in FIG. 2. Again, for convenience of explanation, the focus is on phone component 955-2 (cf. FIG. 2). In the coding sections "..." is used for coding blocks that can be inserted by those skilled in the art and who are familiar with the idea of the present invention.

Coding section 1 illustrates a portion of a tag-source of GUI 955 (<htmlb:page>). Frame-component 955-0 (<htmlb:form>) includes phone-component 955-2 (<htmlb:inputField id = "phone" ...>).

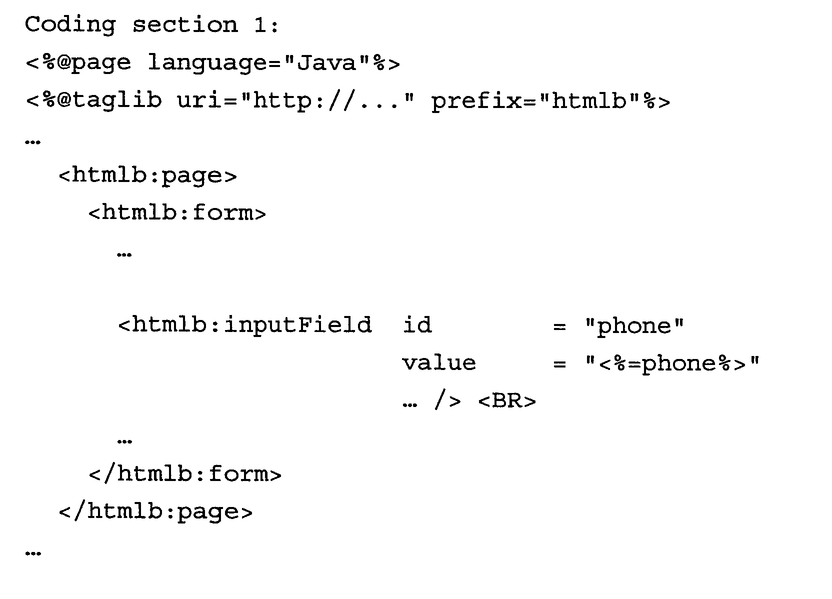

To provide this tag-source to the browser used by client 900, server 901 generates the initial version of browser-document 150 illustrated by coding section 2. Coding section 2 shows content that is included in output-stream 921-OS of FIG. 4D (initial version):

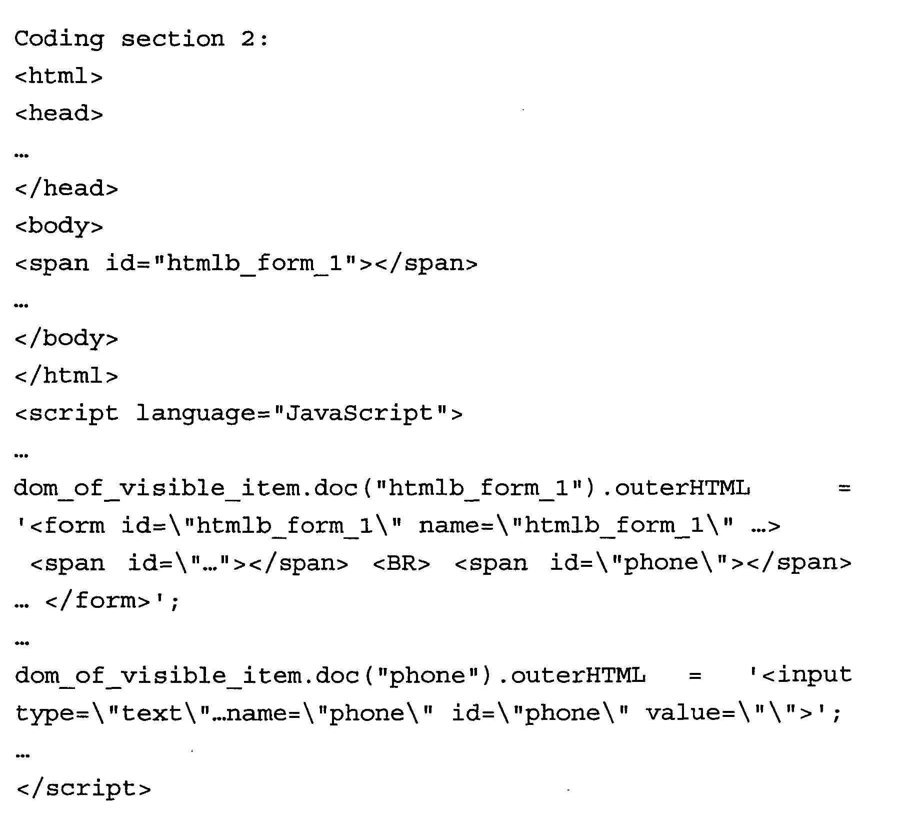

In coding section 2, the portion from <html> to </html> illustrates an HTML-example of content of page-buffer 921-P for the initial version. Referring to the example of FIG. 4D, id="htmlb_form_1" corresponds to id="α".

In the JavaScript portion from <script language="JavaScript"> to </script>, the JavaScript functions
dom_of_visible_item.doc("htmlb_form_1").outerHTML and dom_of_visible_item.doc("phone").outerHTML correspond to JavaScript implementations of browser-components 150-0, 150-2, respectively. The phone number value is empty (... id=\"phone\" value=\"\" ...). When server 901 sends the first version to client 900, coding section 2 is included in output-stream 921-OS.

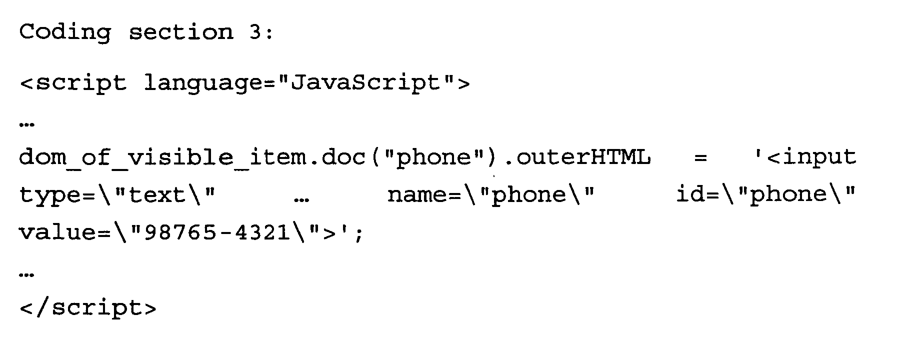

Coding section 3, illustrates a JavaScript implementation example of browser-delta 150-2d (cf. FIG. 4D) stored in identified component-buffer (921-2. Browser-delta 150-2d is written to output-stream 921-OS. In the example, the JavaScript function dom_of_visible_item.doc("phone").outerHTML includes the retrieved phone number value (value=\"98765-4321\") of browser-component 150-2 (id=\"phone\"). Further, dom_of_visible_item.doc("phone").outerHTML indicates to the client that in the document object model that corresponds to browser-document 150 the item("phone") has to be replaced with the output of the function.

FIGS. 5A, 5B illustrate client 900 when processing output-stream 921-OS.

In FIG. 5A, client 900 initially receives output-stream 921-OS from server 901. In one embodiment of the present invention, memory 920 of client 900 stores first frame F1 and second frame F2. For example, output-stream 921-OS is received 710 by either first frame F1 (as in the example) or second frame F2. Client 900 builds 720 document object model DOM 150 of browser-document 150 from output-stream 921-OS. In the example, browser-document 150 includes browser-components 150-0, 150-2, 150-3.

FIG. 5B illustrates updating browser-document 150 with browser-delta 150-2d on client 900.

For example, when client 900 sends 220 (cf. FIG. 3) request 989 to server 901, request 989 indicates to server 901 that any server response (e.g. output-stream 921-OS) has to be sent to first frame F1. When browser-delta 150-2d is received 510 from server 901 as part of output-stream 921-OS, memory 920 stores browser-delta 150-2d in first frame F1. Advantageously, first frame F1 is not visualized on output device 950 (cf. FIG. 2). For example, the width of first frame F1 can be limited to a single pixel.

Client 900 then updates 520 browser-document 150, which is stored in visualized second frame F2. For example, by using the browser-document structure information of page-buffer 921-P from the initial version, client 900 replaces modified parts of browser-component 150-2 with corresponding browser-delta 150-2d (illustrated by dark fill colour) in the document object model (DOM 150) of browser-document 150. Equivalent techniques to inject browser-delta 150-2d into browser-document 150 known by those skilled in the art can be used as well.

It is an effect of the present invention that client 900 performs updating 520 without causing screen-flicker of form 955 (cf. FIG. 2) for the user.

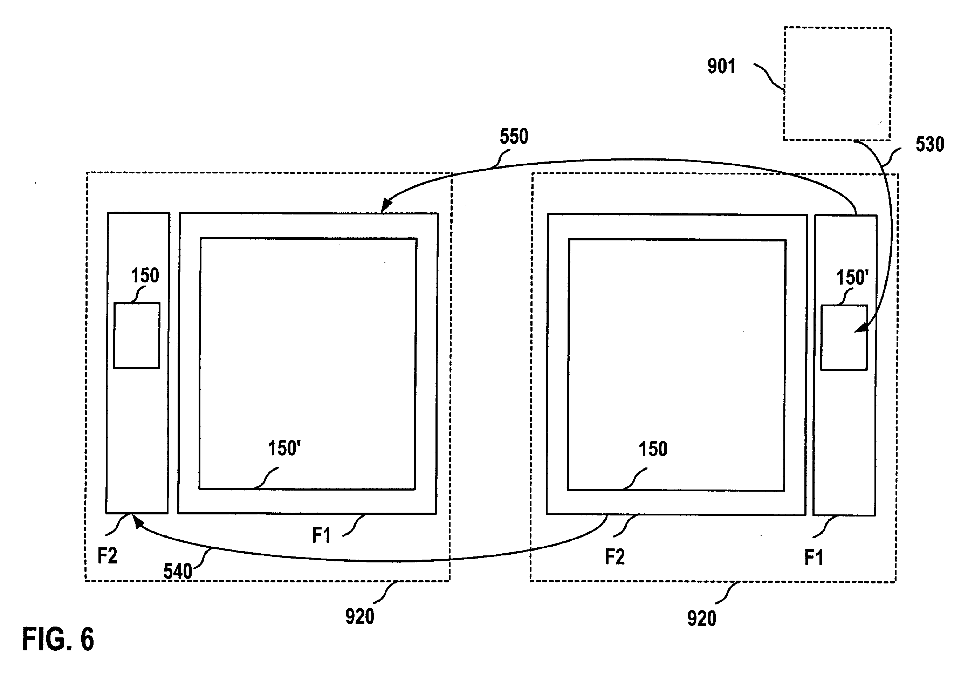

FIG. 6 illustrates a further effect of an embodiment of the invention where client 900 switches the roles of first frame F1 and second frame F2, when new browser-document 150' is received instead of a browser-delta. In other words, when the user interacts with the client in a way that new browser-document 150' instead of a browser-delta for the current browser-document is requested from server 901, client 900 receives new browser-document 150' from server 901 in first frame F1. Then, client 900 recognizes new browser-document 150'. Substantially simultaneously client 900 reduces 540 the size of second frame F2 (so that it preferably becomes invisible for the user) and expands 550 the size of first frame F1, for example, to the previous size of second frame F2 or another size that is appropriate for new browser-document 150'. Alternatively, expanding 550 and can also be performed after reducing 540. This procedure is faster than updating second frame F2 with new browser-document 150' received in first frame F1 and results in less screen flicker and waiting time for the user. Second frame F2 now has the role of a receiver frame for browser-deltas.

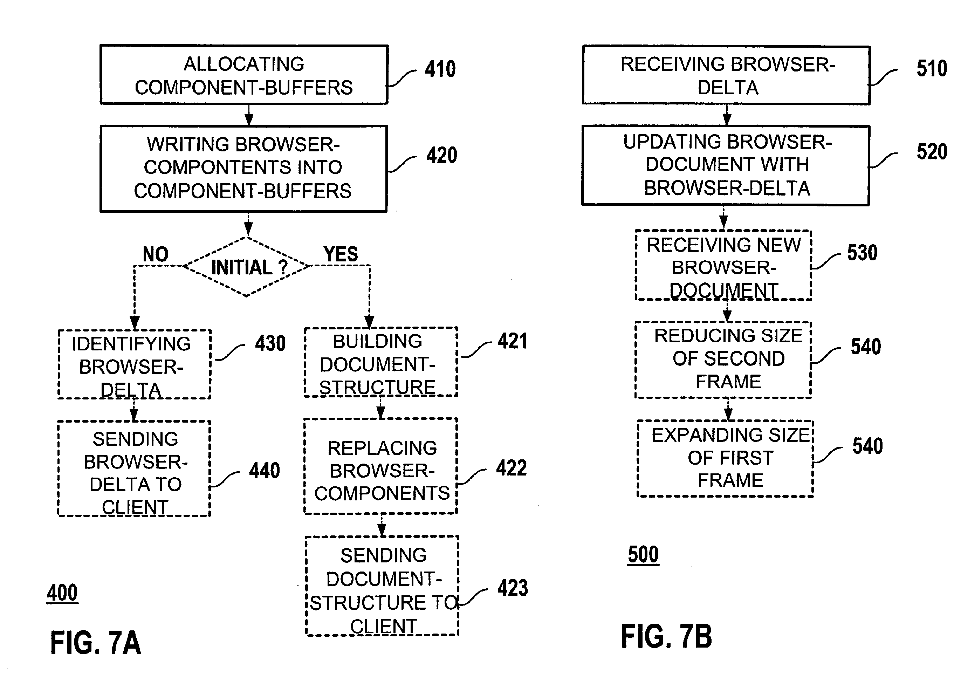

FIG. 7A, 7B illustrate simplified flow charts of server method 400 and client method 500 for delta-handling. Mandatory method steps are illustrated by solid lines/frames. Optional method steps are illustrated by dashed lines/frames.

FIG. 7A illustrates an implementation of server method 400 for delta-handling. Memory 921 of server 901 stores page-document 151 that includes a plurality of page-components 151-0, 151-1, 151-2, 151-3. Server method 400 includes the steps allocating 410 and writing 420. The steps are now explained in more detail:

In the allocating 410 step, a component-buffer (e.g. 921-0, 921-1, 921-2, 921-3) is allocated to each page-component (151-0 151-1, 151-2, 151-3).

In the writing 420 step a corresponding browser-component (e.g. 150-0, 150-1, 150-2, 150-3) is written into each component-buffer (921-0, 921-1, 921-2, 921-3).

In case, server method 400 is not executed for the first time (INITIAL? → NO) for page-document 151, further optional steps identifying 430 and sending 440 are included. The optional steps are now explained in more detail:

In the identifying 430 step, server 901 identifies at least one browser-delta 150-2d in at least one identified component-buffer (921-2).

In the sending 440 step the at least one browser-delta 150-2d is sent from server 901 to client 900.

Preferably, browser-delta 150-2d is in a browser-compliant language selected from the group of HTML, XML, XHTML, WML, Java Script and Visual Basic Script.

In case, server method 400 is executed for the first time (INITIAL? → YES) for page-document 151, further optional steps building 421, replacing 422 and sending 423 are included. The optional steps are now explained in more detail:

Server 901 allocates page-buffer 921-P to page-document 151. In the building 421 step, server 901 builds a document-structure 160. Page-buffer 921-P is the root-node of the document-structure 160 and is a parent-node of at least one component-buffer (e.g. 921-0, 921-3). Each component-buffer (e.g. 921-0) can be a parent-node of further component-buffers (e.g. 921-1, 921-2).

In the replacing 422 step, server 901 replaces the browser-component (e.g. 150-0, 150-2, 150-3) of a child-node (e.g. 921-0, 921-2, 921-3, respectively) in a corresponding parent-node (e.g. 921-P, 921-0) of the document-structure 160 with a representation (e.g. <span ...></span>) of the browser-component (150-0, 150-2, 150-3).

In the sending 423 step, server 901 sends page-buffer 921-P and each component-buffer 921-0, 921-1, 921-2, 921-3 of the document-structure 160 to client 900.

Preferably, page-document 151 is a page selected from the group of Java Server-page (JSP), Business Server-page (BSP) and Active Server-page (ASP). For example, in a page, each page-component (e.g. 151-0, 151-1, 151-2, 151-3) can be represented by a tag within page-document 151.

Preferably, each component-buffer 921-0, 921-1, 921-2, 921-3 is stored in a memory stack of memory 921. It is possible to store component-buffers in another memory of computer system 999.

FIG. 7B illustrates an implementation of client method 500 for delta-handling. Client 900 stores browser-document 150. Browser-document 150 corresponds to page-document 151 that is stored on server 901. Page-document 151 includes a plurality of browser-components (e.g. 150-0, 150-1, 150-2, 150-3), wherein each browser-component (150-0, 150-1, 150-2, 150-3) refers to a corresponding page-component (151-0, 151-1, 151-2, 151-3) of the page-document (151). Client method 500 includes the steps receiving 510 and updating 520. The steps are now explained in more detail.

In the receiving 510 step, the client receives browser-delta 150-2d from server 901. Browser-delta 150-2d refers to a specific browser-component 150-2 and is identified by server 901 via a component-buffer 921-2 that is allocated to the corresponding page-component 151-2.

In the updating 520 step, client 900 updates browser-document 150 with browser-delta 151-2d. To achieve this, client 900 preferably injects browser-delta 151-2d into a document object model of the browser-document 150. The document object model is stored in the client's memory 920.

In one embodiment, client 900 receives browser-delta 151-2d in first frame F1 of client memory 920. Browser-document 150 is updated 520 with browser-delta 151-2d in second frame F2 of client memory 920. Preferably, first frame F1 is invisible.

In an alternative embodiment, client method 500 includes the optional steps:
receiving 530 a new browser-document 150' in the first frame F1;
reducing 540 the size of second frame F2; and
expanding 550 the size of first frame F1.

In the alternative embodiment, preferably, second frame F2 is invisible.

FIGS. 8A, 8B show simplified flow-charts of server method 600 and client method 700 fro enabling delta-handling. For example, a server computer program 101 (cf. FIG.1) executed by server 901 (cf. FIG 1) implements server method 600. For example, a client computer program 100 (cf. FIG. 1) executed by client 900 implements client method 700. For example, computer programs 100, 101 are stored on corresponding data carriers 970, 971 (cf. FIG. 1) or are carried by corresponding signals 980, 981 (cf. FIG. 1).

FIG 8A. illustrates a simplified flow chart of server method 600 for providing output-stream 921-OS to enable delta-handling in server-pages on server 901. Server 901 stores page-document 151 that comprises a plurality of page-components 151-0, 151-2, 151-3. Server method 600 includes the following steps:
Generating 610 for each page-component 151-0, 151-2, 151-3 a corresponding browser-component 150-0, 150-2, 150-3.
Building 620 document-structure 160 of browser-document 150. Browser-document 150 corresponds to page-document. Document-structure 160 includes page-buffer 921-P and each browser-component 150-0, 150-2, 150-3. Page-buffer 921-P and browser-components 150-0, 150-2, 150-3 have relationships that reflect the structure of browser-document 150.

When server method 600 is initially executed, it includes the further optional step:
Sending 630 document-structure 160 to output-stream 921-OS.

When server method 600 is executed at least a second time for page-document 151, it includes the further optional steps:
Identifying 640 at least one browser-delta 150-2d in document-structure 160.

Sending 650 the at least one browser-delta 150-2d to output-stream 921-OS.

In a preferred embodiment of the present invention, output-stream 921-OS does not have redundant information about browser-components but still has all information about the structure and content of browser-document 150.

FIG 8B. illustrates a simplified flow chart of client method 700 for using output-stream 921-OS of server 901 to enable delta-handling on client 900. Client method 700 includes the following steps:
Receiving 710 output-stream 921-OS from server 901. Output-stream 921-OS includes document-structure 160 of browser-document 150. Browser-document 150 corresponds to page-document 151 on server 901. Document-structure 160 includes page-buffer 921-P and a plurality of browser-components 150-0, 150-2, 150-3. Page-buffer 921-P and the browser-components 150-0, 150-2, 150-3 have relationships that reflect the structure of browser-document 150.
Building 720 document object model DOM 150 of browser-document 150 from output-stream 921-OS. Browser-document 150 includes the plurality of browser-components (e.g. 150-0, 150-2, 150-3) of document-structure 160. Building document object model DOM 150 means parsing browser-document 150, which is included in output-stream 921-OS, with a browser and loading the parsed result into client memory 900.

| Reference numbers | |
|---|---|
| **Reference** | **Description** |
| 100/101 | Computer program product |
| 150 | Browser-document |
| 150-x | Browser-components |
| 150-2d | Browser-delta |
| 151 | Page-document |
| 151-x | Page-components |
| 400, 500, 600, 700 | Method |
| 4xx, 5xx, 6xx, 7xx | Method steps |
| 999 | Computer system |
| 900, 901, 902 | Computers |
| 910, 911, 912 | Processors |
| 920, 921, 922 | Memories |
| 921-0 to 921-3 | Component-buffers |
| 921-P | Page-buffer |
| 921-0S | Output-stream |
| 940 | Input device |
| 950 | Output device |
| 955 | Graphical user interface (GUI) |
| 955-x | Form components |
| 960 | User interface |
| 970 | Program carrier (computer readable device) |
| 980 | Program signal |

## Claims

1. A server method (600) for providing an output-stream (921-OS) on a server (901) to enable delta-handling in server-pages, wherein the server (901) stores a page-document (151) that comprises a plurality of page-components (151-0, 151-2, 151-3); the server method (600) comprising the following steps:
generating (610) for each page-component (151-0, 151-2, 151-3) a corresponding browser-component (150-0, 150-2, 150-3; and
building (620) a document-structure (160) of a browser-document (150), wherein the browser-document (150) corresponds to the page-document (151); the document-structure (160) comprising a page-buffer (921-P) and each browser-component (150-0, 150-2, 150-3), wherein the page-buffer (921-P) and the browser-components (150-0, 150-2, 150-3) have relationships that reflect the structure of the browser-document (150).

2. The server method (600) of claim 1, comprising the further step:
sending (630) the document-structure (160) to the output-stream (921-OS).

3. The server method (600) of claim 1, comprising the further steps:
identifying (640) at least one browser-delta (150-2d) in the document-structure (160); and
sending (650) the at least one browser-delta (150-2d) to the output-stream (921-OS).

4. The server method (600) of claim 1, wherein the page-document (151) is a page selected from the group of Java Server-page (JSP), Business Server-page (BSP) and Active Server-page (ASP).

5. The server method (600) of claim 1, wherein each page-component (151-0, 151-2, 151-3) is represented by a tag within the page-document (151).

6. A client method (700) for using an output-stream (921-OS) of a server (901) to enable delta-handling on a client (900); the client method (700) comprising the following steps:
receiving (710) the output-stream (921-OS) from the server (901), wherein the output-stream (921-OS) comprises a document-structure (160) of a browser-document (150); the browser-document (150) corresponding to a page-document (151) on the server (901); the document-structure (160) comprising a page-buffer (921-P) and a plurality of browser-components (150-0, 150-2, 150-3), wherein the page-buffer (921-P) and the browser-components (150-0, 150-2, 150-3) have relationships that reflect the structure of the browser-document (150); and
building (720) from the output-stream (921-OS) a document object model (DOM 150) of the browser-document (150).

7. A computer program product (101) for providing an output-stream (921-OS) on a server (901) to enable delta-handling in server-pages; the computer program product (101) stored on a data carrier (971) or carried by a signal (981) and comprising a plurality of instructions that cause a processor (911) of the server (901) to execute the steps of any of claims 1 to 3.

8. A computer program product (100) for enabling delta-handling on a client (900); the computer program product (100) stored on a data carrier (970) or carried by a signal (980) and comprising a plurality of instructions that cause a processor (910) of the client (900) to execute the steps of claim 6.

9. A data-structure (921-OS) created as an output-stream on a server (901) to enable delta-handling in server-pages, wherein the server (901) stores a page-document (151) that comprises a plurality of page-components (151-0, 151-2, 151-3) and further stores a browser-document (150) that comprises a plurality of browser-components (150-0, 150-2, 150-3), wherein each browser-component (150-0, 150-2, 150-3) corresponds to a page-component (151-0, 151-2, 151-3); the data-structure (921-OS) comprising:
a page-buffer (921-P), wherein the page-buffer (921-P) is the root-node of a document structure (160); and
the plurality of browser-components (150-0, 150-2, 150-3), wherein the page-buffer (921-P) and the browser-components (150-0, 150-2, 150-3) have relationships that reflect the structure of the browser-document (150).

10. A server (901) for providing an output-stream (921-OS) to enable delta-handling in server-pages; the server (901) comprising:
a memory (921) storing a page-document (151) that comprises a plurality of page-components (151-0, 151-2, 151-3); and
a processor (911) executing instructions to:
generate (610) for each page-component (151-0, 151-2, 151-3) a corresponding browser-component (150-0, 150-2, 150-3; and
build (620) a document-structure (160) of a browser-document (150), wherein the browser-document (150) corresponds to the page-document (151); the document-structure (160) comprising a page-buffer (921-P) and each browser-component (150-0, 150-2, 150-3), wherein the page-buffer (921-P) and the browser-components (150-0, 150-2, 150-3) have relationships that reflect the structure of the browser-document (150).

11. The server (901) of claim 10, wherein the processor (911) executes further instructions to:
send (630) the document-structure (160) to the output-stream (921-OS).

12. The server method (600) of claim 10, wherein the processor (911) executes further instructions to:
identify (640) at least one browser-delta (150-2d) in the document-structure (160); and
send (650) the at least one browser-delta (150-2d) to the output-stream (921-OS).

13. A client (900) for using an output-stream (921-OS) of a server (901) to enable delta-handling on the client (900); the client (900) comprising:
a memory (900) for receiving (710) the output-stream (921-OS) from the server (901), wherein the output-stream (921-OS) comprises a document-structure (160) of a browser-document (150); the browser-document (150) corresponding to a page-document (151) on the server (901); the document-structure (160) comprising a page-buffer (921-P) and a plurality of browser-components (150-0, 150-2, 150-3), wherein the page-buffer (921-P) and the browser-components (150-0, 150-2, 150-3) have relationships that reflect the structure of the browser-document (150); and
a processor (910) for executing instructions to build (720) from the output-stream (921-OS) a document object model (DOM 150) of the browser-document (150).
